Europäisches Patentamt

European Patent Office

Office européen des brevets

(11) Numéro de publication: **0 198 750**
A1

## DEMANDE DE BREVET EUROPEEN

(21) Numéro de dépôt: **86400649.9**

(22) Date de dépôt: **26.03.86**

(51) Int. Cl.⁴: **B 29 C 39/02,** B 29 C 33/38, B 29 C 33/42, F 16 H 25/22, B 23 H 1/04 // B29L1:00, B29L31:04

(30) Priorité: **01.04.85 FR 8504936**

(43) Date de publication de la demande: **22.10.86** **Bulletin 86/43**

(84) Etats contractants désignés: **CH DE GB IT LI**

(71) Demandeur: **NOVATOME, La Boursidière R.N. 186, F-92357 Le Plessis Robinson (FR)**

(72) Inventeur: **Martin, Jean, 5 rue Corot, F-92330 Chatillon (FR)**

(74) Mandataire: **Bressand, Georges et al, c/o CABINET LAVOIX 2 Place d'Estienne d'Orves, F-75441 Paris Cedex 09 (FR)**

(54) **Procédé de fabrication d'un déviateur pour système vis-écrou à billes à recyclage interne.**

(57) Ce procédé de fabrication d'un déviateur pour système vis-écrou à billes à recyclage interne, dans lequel ladite vis (8) comporte un filet présentant au moins deux spires (9, 10) est caractérisé en ce qu'on enroule une portion d'extrémité (11a) d'une tige (11) de section circulaire et de diamètre légèrement supérieur au diamètre des billes, constituée d'un matériau déformable plastique, sur au moins une partie de l'une desdites spires (9), on galbe ladite tige (11) de façon à la faire franchir le sommet du filet séparant lesdites spires de la vis et de maniére que les deux galbes de la tige formés de part et d'autre du sommet du filet de la vis soient identiques, on enroule l'autre portion d'extrémité (11b) de la tige (11) sur au moins une partie de la deuxième spire (10) et on effectue, à partir de la tige (11) ainsi disposée dans lesdites spires (9, 10), la prise d'une empreinte définissant la cavité du déviateur à partir de laquelle on réalise ledit déviateur.

EP 0 198 750 A1

La présente invention concerne les systèmes vis-écrou à billes et elle se rapporte plus particulièrement à un procédé de fabrication d'un déviateur de billes pour système vis-écrou à billes à recyclage interne.

Les systèmes vis-écrou à billes que l'on rencontre dans l'état de la technique, sont généralement à recyclage de billes.

A cet effet, un dispositif de transfert des billes est nécessaire pour assurer un cheminement continu des billes entre l'écrou et la vis.

Plusieurs solutions de transfert des billes ont été proposées :

- une première solution consiste en un transfert externe des billes qui, après plusieurs tours sur la vis, sont ramenées à l'extrémité d'entrée du circuit par l'intermédiaire d'une goulotte montée à l'extérieur de l'écrou. Cependant, les systèmes à transfert externe présentent de nombreux inconvénients, notamment au niveau de leur lubrification et des cuillères de récupération des billes qui sont extrêmement délicates à réaliser et à entretenir.

- une deuxième solution consiste en un transfert interne des billes qui après avoir parcouru un tour sur la vis, sont ramenées à la spire précédente du filet de vis au moyen d'un déviateur disposé à l'intérieur de l'écrou. Cette solution présente de nombreux avantages. En effet, il n'existe pas dans ce type de système vis-écrou à billes, de cuillère de récupération, le diamètre de l'écrou est réduit par rapport à la solution précédente, de même que le trajet le long duquel les billes sont inactives.

Ceci conduit donc à un déviateur assurant une meilleure récupération et une meilleure réinjec-

0198750

tion des billes dans le système vis-écrou.

Cependant, on conçoit qu'un tel déviateur devant assurer le transfert des billes d'une spire à une autre, possède une forme relativement complexe. En effet, par suite de dimension réduite, le déviateur présente de fortes courbures dans les trois dimensions de l'espace et comme on le sait, l'usinage direct, notamment à l'aide de machines à commande numérique, présente de nombreuses difficultés, en particulier pour la réalisation de ces courbures.

Or, il est extrêmement important pour obtenir un fonctionnement satisfaisant du déviateur, que sa forme soit telle que le cheminement des billes soit parfaitement continu et régulier, ceci afin de réduire l'usure et le bruit engendrés dans un tel système vis-écrou, mais également pour prévenir tous risques de blocage de celui-ci. Ceci n'est donc pas le cas avec les procédés de fabrication par usinage direct tels qu'ils sont utilisés actuellement pour la fabrication des déviateurs.

On connaît également d'après le document GB-A-897 008, un procédé de fabrication d'un déviateur pour système vis-écrou à billes à recyclage interne. Dans ce procédé, on effectue la prise d'une empreinte définissant la cavité du déviateur à partir de laquelle on réalise le déviateur, sur une matrice disposée sur la vis et matérialisant le trajet des billes entre deux spires de cette vis. Cependant, ce document ne décrit aucun mode de réalisation de cette matrice. Or, on sait que la réalisation de cette matrice est relativement importante car elle définit la qualité de l'empreinte et par là celle du déviateur lui-même.

Un but de l'invention est donc de proposer un procédé de fabrication d'un déviateur qui permette de résoudre les problèmes évoqués ci-dessus.

Un autre but de l'invention est de proposer un procédé de fabrication d'un déviateur dont la mise en oeuvre soit simple et qui permette de fabriquer des déviateurs de manière économique.

A cet effet, l'invention a pour objet un procédé de fabrication d'un déviateur pour système vis-écrou à billes à recyclage interne, ladite vis comportant un filet présentant au moins deux spires, dans lequel on effectue une prise d'empreinte définissant la cavité du déviateur à partir de laquelle on réalise ledit déviateur, sur une matrice matérialisant le trajet des billes entre les deux spires, disposée sur la vis, caractérisé en ce qu'on réalise la matrice en enroulant une portion d'extrémité d'une tige de section circulaire et de diamètre légèrement supérieur au diamètre des billes, constituée d'un matériau déformable plastique, sur au moins une partie de l'une desdites spires, en galbant ladite tige de façon à la faire franchir le sommet du filet séparant lesdites spires de la vis et de manière que les deux galbes de la tige, formés de part et d'autre du sommet du filet de la vis soient identiques, et en enroulant l'autre portion d'extrémité de la tige sur au moins une partie de la deuxième spire et en ce qu'on effectue à partir de la tige ainsi disposée dans lesdites spires, la prise de ladite empreinte.

L'invention sera mieux comprise à l'aide de la description qui va suivre, donnée uniquement à titre d'exemple et faite en se référant aux dessins annexés, sur lesquels :

- la Fig.1 représente une vue de côté d'un système vis-écrou à billes dans laquelle certaines parties sont représentées en coupe;

- la Fig.2 représente une vue de dessus de la Fig.1 dans laquelle certaines parties sont également représentées en coupe;

- la Fig.3 représente une vue de côté d'une vis entrant dans la constitution d'un système vis-écrou à billes et sur laquelle est disposée une tige matérialisant le cheminement des billes;

- la Fig.4 représente une vue en perspective d'un gabarit sur lequel est disposée une tige matérialisant le cheminement des billes;

- les Fig.5,6,7,8 et 9 représentent respectivement des coupes selon les lignes A-A, B-B, C-C, D-D, E-E de la Fig.3;

- la Fig.10 représente un exemple de réalisation d'un dispositif de prise d'empreinte par le procédé de fabrication d'un déviateur selon l'invention;

- la Fig.11 représente une vue en coupe selon la ligne F-F de la Fig.10;

- la Fig.12 représente un exemple d'une empreinte obtenue par le procédé selon l'invention;

- les Fig.12A, 12B, 12C et 12D représentent respectivement des coupes partielles selon les lignes G-G,H-H, I-I, J-J de la Fig.12;

- la Fig.13 représente une partie d'un dispositif d'électrodéposition permettant d'obtenir une réplique d'un déviateur à partir d'une empreinte réalisée selon le procédé de l'invention; et

- la Fig.14 représente une vue en coupe d'un exemple de chemin de roulement d'un déviateur pouvant être obtenu par le procédé de fabrication selon l'invention.

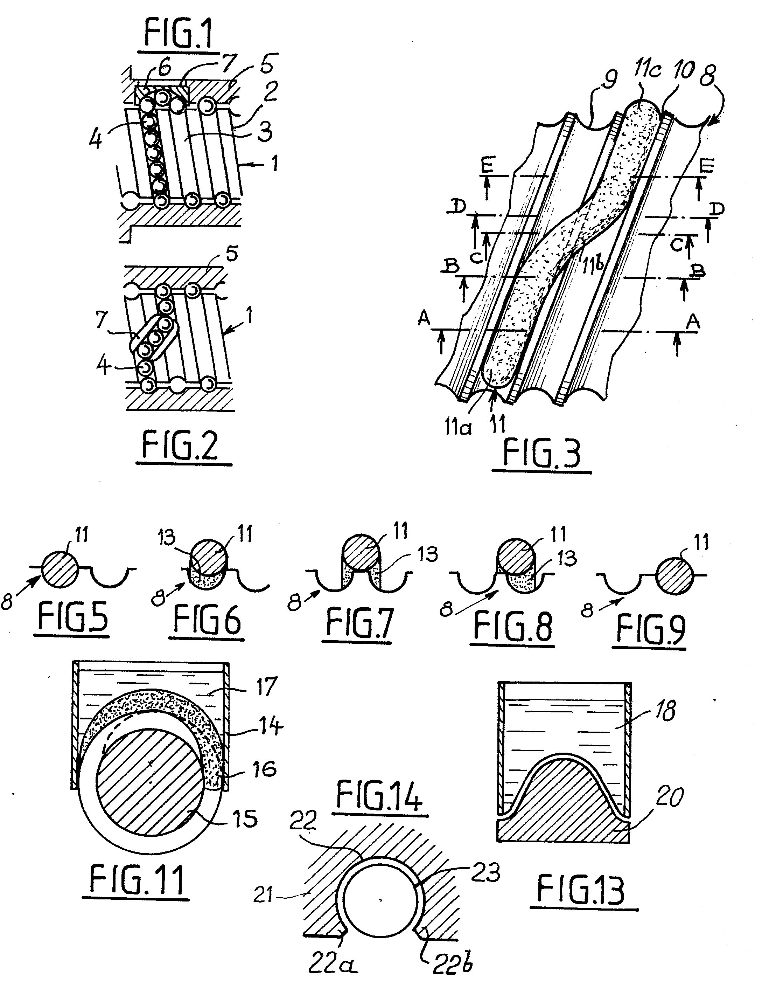

Ainsi qu'on peut le voir sur la Fig.1, un système vis-écrou à billes est constitué d'une vis 1 comportant un filet 2 présentant plusieurs spires 3 dans lesquelles circulent des billes 4. Ce système comporte également un écrou 5 comportant un évidement 6 dans lequel est logé un déviateur 7. Ce déviateur 7 permet de transférer les billes 4 d'une spire à l'autre, comme on peut le voir plus clairement sur la Fig.2.

Dans l'état de la technique, ces déviateurs étaient fabriqués par usinage direct, à l'aide notamment de machines à commande numérique. Cependant, on a vu que ce type d'usinage présentait un certain nombre de difficultés.

Le procédé de fabrication selon l'invention comporte plusieurs étapes dont la première est illustrée sur la Fig.3. Cette première étape consiste à disposer sur une vis 8, dont le filet présente plusieurs spires (dont seulement deux, 9 et 10, sont représentées), une tige 11 de section circulaire et de diamètre légèrement supérieur au diamètre des billes 4. Cette tige 11 est constituée d'un matériau déformable plastique, tel que par exemple du cuivre recuit ou du laiton recuit.

Ainsi qu'on peut le voir sur cette figure, une portion d'extrémité 11a de cette tige est enroulée sur au moins une partie de l'une, 9, desdites spires de la vis, tandis que la partie centrale 11b de cette tige est galbée de façon à passer au-dessus du sommet du filet séparant lesdites spires de la vis. L'autre portion d'extrémité 11c de la tige 11 est enroulée sur au moins une partie de la spire 10.

Cette tige 11 matérialise donc la trajectoire des billes juste avant, pendant et juste après le transfert des billes entre les spires.

Cette matérialisation peut par exemple être réalisée sur un calibre 12 (Fig.4) représentant une portion de vis.

Avantageusement, comme on le voit sur la Fig.3, la tige 11 peut se présenter, en plan, sous la forme générale d'une portion de sinusoïde dans laquelle les deux galbes, formés de part et d'autre du sommet du filet de la vis, permettant à la tige de franchir le sommet du filet, sont identiques de façon à permettre un fonctionnement réversible de l'ensemble.

Selon différents modes de réalisation de l'invention, il peut être nécessaire comme on le voit sur les Fig.5 à 9 de disposer un matériau de remplissage 13, tel que de la brasure, dans les parties situées sous le plan diamétral de la tige 11, parallèle à l'axe de la vis, de façon à constituer deux plans parallèles et verticaux qui permettront le démoulage ultérieur de l'empreinte.

Cependant, ce matériau de remplissage peut dans certains cas ne pas être nécessaire.

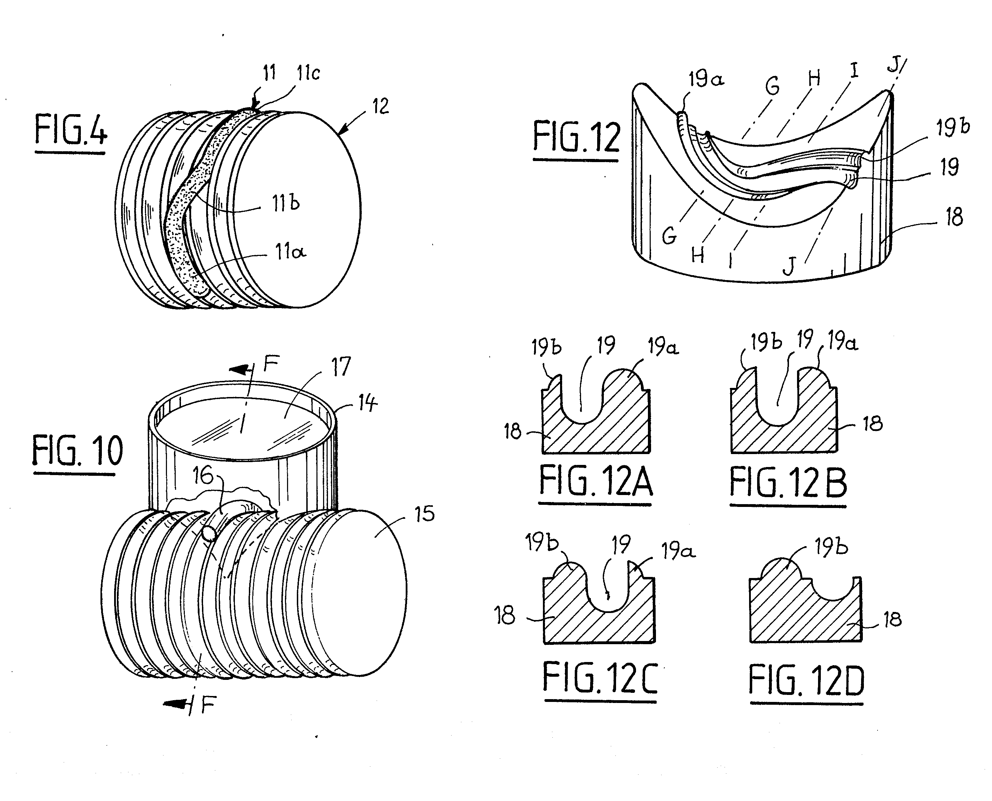

Comme on peut le voir sur la Fig.10 qui représente un exemple de réalisation d'un dispositif de prise d'empreinte pouvant être utilisé pour la mise en oeuvre du procédé selon l'invention, un tube 14 dont une extrémité est usinée suivant un diamètre d'une vis 15 et dont l'axe est perpendiculaire à celui de la vis est disposé sur cette vis 15 de manière à entourer une tige 16 de matérialisation de la trajectoire des billes. Ce tube 14 est fixé de manière amovible sur cette vis 15. Le tube est alors rempli par exemple, d'une susbtance durcissable telle qu'une pâte polymérisable 17 à retrait nul ou très faible qui va prendre l'empreinte de la matérialisation de la trajectoire des billes et ainsi réaliser la forme optimisée du déviateur, ainsi qu'on peut le voir sur la Fig.11.

Comme on peut le voir sur la Fig.12, on obtient une empreinte 18 présentant une cavité 19 de guidage des billes permettant à celles-ci de passer d'une spire à une autre. Cette cavité 19, comme on peut le voir plus clairement sur les Fig.12A,12B,12C et 12D se présente sous la forme d'une rainure arrondie dont la profondeur va en s'accroissant de ses extrémités jusqu'à sa partie centrale correspondant au passage des billes au-dessus du sommet du filet de la vis. De plus, cette rainure présente des rebords 19a et 19b dont la forme est définie par l'espace séparant le matériau de remplissage 13 et les spires du filet de vis lors de la prise de l'empreinte.

Il est à noter que les courbures de la rainure sont parfaitement continues et que les rebords 19a et 19b, disposés de part et d'autre de ladite rainure, possèdent une section transversale initiale demi-circulaire qui diminue de manière progressive d'une première extrémité de la rainure à une seconde extrémité pour l'un des rebords et de la seconde extrémité à la première, pour l'autre.

Cette empreinte est ensuite utilisée de diverses façons.

Ainsi par exemple, cette empreinte peut constituer directement le déviateur et peut, après une finition par usinage pour la partie fixation, être placée dans un logement prévu à cet effet dans l'écrou de façon à constituer le dispositif de transfert de billes du système vis- écrou à billes.

Cependant, l'empreinte ainsi obtenue peut également être revêtue d'un matériau conducteur en faible épaisseur et il est alors possible comme on le voit sur la Fig.13, d'obtenir une réplique métallique

par électrodéposition, en remplissant ladite empreinte 18 par exemple de cuivre.

Cette réplique peut alors être utilisée de deux façons :

- soit pour la réalisation d'un déviateur métallique qui est taillé par usinage en électro-érosion de manière classique dans un métal quelconque, en utilisant ladite réplique comme électrode,

- soit pour la réalisation d'un déviateur en matériau plastique, la réplique servant alors de fond de moule.

Cette solution présente l'avantage de réaliser, à partir d'une réplique, des déviateurs en d'autres matériaux et ceci en quantité importante et de manière économique.

Comme on peut le voir sur la Fig.14 qui représente un déviateur 21 comportant une cavité 22, cette cavité peut présenter des lèvres 22$\underline{a}$ et 22$\underline{b}$ s'étendant légèrement en-dessous d'une bille 23 de façon à maintenir celle-ci dans la cavité lors du cheminement de la bille dans le déviateur 21.

On voit donc apparaître que le procédé permet de réaliser facilement et à moindre coût, une empreinte pouvant être utilisée directement comme déviateur dont la forme est relativement complexe et difficilement réalisable en usinage conventionnel, dont le cheminement des billes est parfaitement régulier et continu. Il est également possible, à partir de l'empreinte ainsi réalisée, d'obtenir une réplique permettant par exemple de fabriquer un moule utilisable pour une fabrication en grande quantité de tels déviateurs.

D'autre part, on peut également envisager grâce à ce procédé de fabrication, la réalisation d'un gabarit permettant un usinage par copiage ne présentant pas de difficultés mentionnées au sujet des usinages directs.

Il est également possible d'obtenir plusieurs prises d'empreintes à partir de la même tige de matérialisation si les portions d'extrémité de celleci sont enroulées sur au moins une spire de la vis de façon à maintenir la tige en position lorsque l'empreinte est retirée.

0198750

REVENDICATIONS

1.Procédé de fabrication d'un déviateur pour système vis-écrou à billes à recyclage interne, ladite vis (1;8;12;15) comportant un filet (2) présentant au moins deux spires (9,10), dans lequel on effectue une prise d'empreinte (18) définissant la cavité (19) du déviateur à partir de laquelle on réalise ledit déviateur, sur une matrice matérialisant le trajet des billes entre les deux spires, disposée sur la vis, caractérisé en ce qu'on réalise la matrice en enroulant une portion d'extrémité (11a) d'une tige (11) de section circulaire et de diamètre légèrement supérieur au diamètre des billes (4), constituée d'un matériau déformable plastique, sur au moins une partie de l'une desdites spires (9), en galbant ladite tige (11) de façon à la faire franchir le sommet du filet séparant lesdites spires de la vis et de manière que les deux galbes de la tige, formés de part et d'autre du sommet du filet de la vis soient identiques, et en enroulant l'autre portion d'extrémité (11b) de la tige (11) sur au moins une partie de la deuxième spire (10) et en ce qu'on effectue à partir de la tige (11) ainsi disposée dans lesdites spires (9,10), la prise de ladite empreinte (18).

2. Procédé de fabrication selon la revendication 1, caractérisé en ce qu'on dispose un matériau de remplissage (13) dans la partie située sous le plan diamètral de la bille (11), parallèle à l'axe de la vis (8), on fixe de manière amovible un tube (14) dont une extrémité est usinée suivant un diamètre de la vis, perpendiculairement par rapport à l'axe de ladite vis (15) et on place dans ledit tube (14) une substance durcissable de façon à obtenir ladite empreinte.

3. Procédé de fabrication selon la revendication 1 ou 2, caractérisé en ce qu'on recouvre l'empreinte ainsi obtenue avec un dépôt conducteur de faible épaisseur et en ce qu'on remplit ladite empreinte, par électrodéposition, d'un matériau conducteur de façon à obtenir une réplique métallique de ladite empreinte.

4. Procédé de fabrication selon la revendication 3, caractérisé en ce qu'on utilise la réplique métallique ainsi obtenue comme électrode pour l'usinage par électro-érosion d'un déviateur en métal.

5. Procédé de fabrication selon la revendication 3, caractérisé en ce qu'on utilise la réplique métallique ainsi obtenue comme fond d'un moule pour la réalisation d'un déviateur en matière plastique.

6. Procédé de fabrication selon la revendication 1, caractérisé en ce que la tige (11) est constituée de cuivre recuit.

7. Procédé de fabrication selon la revendication 1, caractérisé en ce que la tige (11) est constituée de laiton recuit.

FIG.1

FIG.2

FIG.3

FIG5

FIG6

FIG.7

FIG.8

FIG.9

FIG.11

FIG.14

FIG.13

FIG.4

11  11c

12

11b

11a

FIG. 10

F

17

14

16

15

F

FIG.12

19a  G  H  I  J

19b

19

18

G  H  I  J

FIG.12A

19b  19  19a

18  18

FIG.12B

19b  19  19a

18

FIG.12C

19b  19  19a

18

FIG.12D

19b

18

2/2

0198750

Office européen
des brevets

**RAPPORT DE RECHERCHE EUROPEENNE**

0198750
Numéro de la demande

EP 86 40 0649

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | GB-A- 897 008 (CAM GEARS LTD.)<br>* Page 1, lignes 21-40, 80-82; page 2, lignes 1-13, 25-32; revendicatons 6,7; figures 1-5 *<br><br>--- | 1,6,7 | B 29 C 39/02<br>B 29 C 33/38<br>B 29 C 33/42<br>F 16 H 25/22<br>B 23 H 1/04 //<br>(B 29 L 1/00<br>B 29 L 31:04 ) |
| A | FR-A-1 597 152 (RATIER-FOREST)<br>* Page 2, lignes 27-33; revendication 1; figures 1-8 *<br><br>--- | 1,3,4 | |
| A | US-A-4 272 476 (BENTON)<br>* Abrégé; figures 1-6; colonne 2, lignes 41-44; colonne 4, lignes 27-35 *<br><br>--- | 1 | |
| A | FR-A-2 328 138 (VERDUN)<br>* Page 2, ligne 15 *<br><br>--- | 4 | |
| A | EP-A-0 103 316 (ALFREDO & F. LLI)<br><br>--- | | **DOMAINES TECHNIQUES RECHERCHES (Int. Cl.4)**<br><br>B 29 C<br>F 16 H |
| A | GB-A- 920 649 (SPECIALITIES DEVELOPMENT)<br><br>----- | | |

Le présent rapport de recherche a été établi pour toutes les revendications

| Lieu de la recherche | Date d'achèvement de la recherche | Examinateur |
|---|---|---|
| LA HAYE | 09-07-1986 | KUHN E.F.E. |